# EUROPÄISCHE PATENTSCHRIFT

(11) **EP 4 168 652 B1**
(45) Veröffentlichungstag und Bekanntmachung des Hinweises auf die Patenterteilung: **12.06.2024**
(21) Anmeldenummer: 21762389.1
(22) Anmeldetag: 06.08.2021
(51) Int. Cl.: F01D 5/00

(54) **VERFAHREN ZUM REPARIEREN EINES BESCHÄDIGTEN VORDER- ODER HINTERKANTENBEREICHES EINER METALLISCHEN TURBINENSCHAUFEL**
METHOD OF REPAIRING A DAMAGED LEADING OR TRAILING EDGE PORTION OF A METALLIC TURBINE BLADE
PROCÉDÉ DE RÉPARATION D'UNE ZONE DE BORD D'ATTAQUE OU DE FUITE ENDOMMAGÉE D'UNE AUBE DE TURBINE MÉTALLIQUE

(30) Priorität: 24.09.2020 DE 102020212006
(43) Veröffentlichungstag der Anmeldung: 26.04.2023
(73) Patentinhaber: Siemens Energy Global GmbH & Co. KG, 81739 München (DE)
(72) Erfinder: ANDERS, Björn, 13187 Berlin (DE); ANTON, Reiner, 14193 Berlin (DE); GARSKE, Constantin, 16547 Birkenwerder (DE); KRABIELL, Kay, 16562 Hohen Neuendorf (DE); LAMMERS, Heiko, 10789 Berlin (DE); NILSSON, Ricardo, 40474 Düsseldorf (DE); VÖHRINGER, Daniel, 14167 Berlin (DE); ZIEGE, Jörg, 13583 Berlin (DE)
(86) Internationale Anmeldenummer: PCT/EP2021/072032
(87) Internationale Veröffentlichungsnummer: WO 2022/063475

(56) Entgegenhaltungen:
- EP-A2- 2 317 075
- US-A1- 2011 264 413
- US-B1- 6 238 187

## Beschreibung

Die vorliegende Erfindung betrifft ein Verfahren zum Reparieren eines beschädigten Vorder- oder Hinterkantenbereiches einer metallischen Turbinenschaufel, die eine saugseitige Schaufelwand, eine druckseitige Schaufelwand sowie eine Vorderkante und eine Hinterkante aufweist, umfassend die Schritte:
a) Entfernen des beschädigten Vorder- oder Hinterkantenbereiches unter Erzeugung eines Ausschnitts;
b) Bereitstellen eines formschlüssig in den Ausschnitt einsetzbaren, die Soll-Geometrie der Turbinenschaufel wiederherstellenden Ersatzteils;
c) formschlüssiges Einsetzen des Ersatzteils in den Ausschnitt in einer vorbestimmten Einsetzrichtung, und
d) stoffschlüssiges Verbinden des Ersatzteils mit der Turbinenschaufel.

Turbinenschaufeln werden in Strömungsmaschinen eingesetzt, wie beispielsweise in Gasturbinen. Grundsätzlich wird zwischen rotierenden Laufschaufeln und ortsfesten Leitschaufeln unterschieden, welche ein fluides Arbeitsmedium in einer vorbestimmten Richtung auf die Laufschaufeln richten. Während des Betriebs einer Gasturbine sind Turbinenschaufeln insbesondere aufgrund hoher thermischer Belastungen und einer korrosiven Umgebung starken Beanspruchungen ausgesetzt, was zum Verschleiß führt. So leiden beispielsweise die Hinterkanten an einem Materialverlust, der eine Reduzierung der Leistung, eine Verschlechterung der Kühlung oder gar ein vollständiges Versagen der Turbinenschaufel nach sich zieht. Um den ordnungsgemäßen Betrieb der Gasturbine aufrechterhalten zu können, ist es entsprechend erforderlich, verschlissene Turbinenschaufeln auszutauschen oder zu reparieren.

Zur Reparatur eines beschädigten Vorder- oder Hinterkantenbereiches einer metallischen Turbinenschaufel sind bereits Verfahren bekannt, bei denen ein verschlissener Bereich unter Erzeugung eines Ausschnitts entfernt wird. Anschließend wird ein in den Ausschnitt formschlüssig einsetzbares, die Soll-Geometrie des beschädigten Bereiches wiederherstellendes Ersatzteil bereitgestellt. Derartige Ersatzteile werden häufig auch als Coupon bezeichnet. In einem weiteren Schritt wird das Ersatzteil in einer vorbestimmten Einsetzrichtung formschlüssig in den Ausschnitt eingesetzt. Zur Fixierung des Ersatzteils wird dieses dann stoffschlüssig mit der Turbinenschaufel verbunden, beispielsweise unter Einsatz eines Löt- oder Schweißverfahrens. Ein solches Verfahren ist beispielsweise in der Druckschrift EP 2 317 075 B1 beschrieben.

Ausgehend von diesem Stand der Technik ist es eine Aufgabe der vorliegenden Erfindung, ein verbessertes Verfahren zum Reparieren eines beschädigten Vorder- oder Hinterkantenbereiches einer metallischen Turbinenschaufel zu schaffen.

Zur Lösung dieser Aufgabe schafft die vorliegende Erfindung ein Verfahren der eingangs genannten Art, das dadurch gekennzeichnet ist, dass in Schritt a) an den Schaufelwänden bezogen auf die Einsetzrichtung hinterschneidungsfreie Ausnehmungen ausgebildet werden, wobei die Ausnehmungen der saugseitigen Schaufelwand versetzt zu den Ausnehmungen der druckseitigen Schaufelwand positioniert sind, wenn die Turbinenschaufel von der Seite aus betrachtet wird, dass das in Schritt b) bereitgestellte Ersatzteil Vorsprünge aufweist, die in Schritt c) formschlüssig in die Ausnehmungen eingeführt werden, wobei das Ersatzteil und die Turbinenschaufel nach dem Einsetzen des Ersatzteils einander überlappende Bereiche aufweisen, wenn die Turbinenschaufel von der Seite aus betrachtet wird, und dass das Ersatzteil in Schritt c) nach dem Einsetzen in den Ausschnitt mechanisch unter Verwendung von sich durch die einander überlappenden Bereiche erstreckenden Befestigungselementen derart an der Turbinenschaufel fixiert wird, dass diese mechanische Fixierung ein Herausnehmen des Ersatzteils aus dem Ausschnitt entgegen der vorbestimmten Einsetzrichtung blockiert.

Dank der in den Schaufelwänden der nach Durchführung des Schrittes a) verbleibenden Turbinenschaufel ausgebildeten Ausnehmungen und der in diese eingreifenden Vorsprünge des Ersatzteils einerseits und der Befestigungselemente andererseits, mit denen das Ersatzteil an der Turbinenschaufel befestigt wird, wird zusätzlich zu der in Schritt d) erzeugten stoffschlüssigen Verbindung eine mechanische Verbindung erzielt, wodurch die stoffschlüssige Verbindung stark entlastet wird. Die Ausnehmungen und die in diese eingreifenden Vorsprünge verhindern eine Relativbewegung zwischen der Turbinenschaufel und dem Ersatzteil in zumindest einer, bevorzugt in beiden Richtungen senkrecht zur Einsetzrichtung, und die Befestigungselemente eine Relativbewegung der Komponenten entgegen der Einsetzrichtung. Insgesamt wird entsprechend eine sehr stabile Befestigung des Ersatzteils an der Turbinenschaufel gewährleistet, was zu einer erhöhten Lebensdauer der reparierten Turbinenschaufel führt.

Gemäß einer Ausgestaltung der vorliegenden Erfindung wird der Ausschnitt in Schritt a) unter Einsatz eines Erodierprozesses, insbesondere eines Senkerodierprozesses oder Drahterodierprozesses erzeugt. Solche Erodierprozesse zeichnen sich durch eine hohe Abtraggenauigkeit aus.

Die Befestigungselemente sind bevorzugt stiftartig ausgebildet und durch in den Überlappungsbereichen vorgesehene Durchgangsöffnungen geführt, wodurch eine einfach technische Realisierung der Befestigung erzielt wird. Die Durchgangsöffnungen können nach Erzeugen des Ausschnitts in Schritt a) beispielsweise mechanisch erzeugt, insbesondere gebohrt werden.

Das Ersatzteil wird vorteilhaft additiv gefertigt. Die additive Fertigung ist zum einen dahingehend von Vorteil, dass sich das Ersatzteil bei Bedarf schnell und preiswert fertigen lässt. Entsprechend kann auf eine kostspielige Lagerhaltung von Ersatzteilen verzichtet werden. Zum andere lassen sich mit der additiven Fertigung auch Ersatzteile mit sehr komplizierten Geometrien problemlos herstellen.

Bevorzugt handelt es sich bei dem Ersatzteil um ein Standardersatzteil mit Standardabmessungen, wobei das Erzeugen des Ausschnitts in Schritt a) unter Berücksichtigung dieser Standardabmessungen erfolgt. Derart standardisierte Ersatzteile haben den Vorteil, dass Form und Abmessungen nicht für jeden Reparaturprozess neu ermittelt werden müssen, was eine deutliche Zeit- und Kostenersparnis nach sich zieht.

Das Standardersatzteil kann vor dem Einsetzen in Schritt c) bearbeitet werden, um Abweichungen der Geometrie des Standardersatzteils von der Geometrie des Ausschnitts zu minimieren. Dies kann beispielsweise dann erforderlich sein, wenn sich die Turbinenschaufel während des Betriebs der Strömungsmaschine leicht verzogen hat. Für die Bearbeitung wird bevorzugt ein mechanisches Bearbeitungsverfahren eingesetzt, beispielsweise in Form eines Fräs- und/oder Schleifprozesses.

Gemäß einer Ausgestaltung der vorliegenden Erfindung sind die Stoßkanten des Ersatzteils mit abstandshaltenden Vorsprüngen versehen, die zur Einstellung einer vorbestimmten Fugenbreite für das stoffschlüssige Verbinden dienen. Auf diese Weise kann eine stoffschlüssige Verbindung mit sehr hoher Güte erzielt werden.

Vorteilhaft erfolgt das stoffschlüssige Verbinden des Ersatzteils mit der Turbinenschaufel unter Einsatz eines Lötverfahrens, insbesondere unter Einsatz eines Engspaltlötverfahrens.

Ferner schafft die vorliegende Erfindung eine Turbinenschaufel, die eine saugseitige Schaufelwand, eine druckseitige Schaufelwand sowie eine Vorderkante und eine Hinterkante aufweist, wobei ein beschädigter Vorder- oder Hinterkantenbereich unter Einsatz eines erfindungsgemäßen Verfahrens repariert ist.

Weitere Merkmale und Vorteile der vorliegenden Erfindung werden anhand der nachfolgenden Beschreibung eines Verfahrens gemäß einer Ausführungsform der vorliegenden Erfindung unter Bezugnahme auf die beiliegende Zeichnung deutlich. Darin ist
- Figur 1: eine schematische Darstellung der Verfahrensschritte eines Verfahrens gemäß einer Ausführungsform der vorliegenden Erfindung;
- Figur 2: eine Seitenansicht eines Teilbereiches einer Turbinenschaufel mit beschädigter Hinterkante, die unter Einsatz des in Figur 1 dargestellten Verfahrens repariert werden soll;
- Figur 3: eine Seitenansicht der in Figur 2 dargestellten Turbinenschaufel, bei welcher der beschädigte Hinterkantenbereich unter Erzeugung eines Ausschnitts entfernt wurde, und eines formschlüssig in den Ausschnitt einsetzbaren, die Soll-Geometrie der beschädigten Hinterkante wiederherstellenden Ersatzteils;

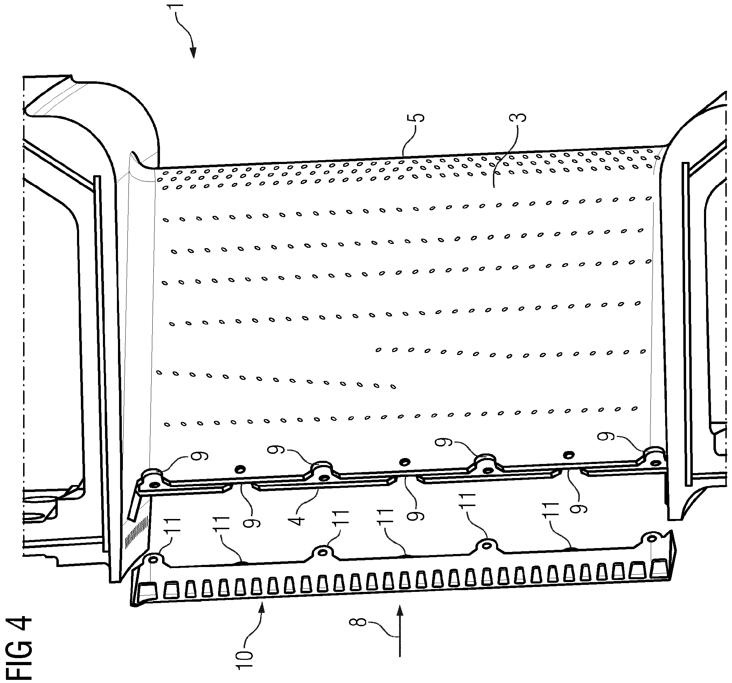

- Figur 4: eine perspektivische Ansicht der in Figur 3 gezeigten Anordnung; und
- Figur 5: eine Seitenansicht der in den Figuren 3 und 4 dargestellten Anordnung in einem Zustand, in dem das Ersatzteil an der Turbinenschaufel befestigt ist.

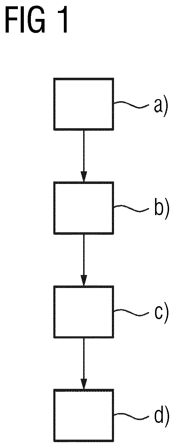

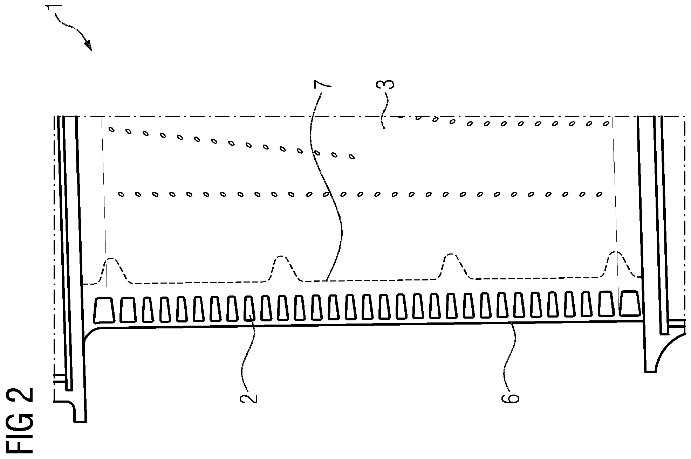

Figur 1 zeigt schematisch ein Verfahren gemäß einer Ausführungsform der vorliegenden Erfindung, das zum Reparieren einer beschädigten metallischen Turbinenschaufel 1 eingesetzt wird. Im vorliegenden Beispiel wird mit dem erfindungsgemäßen Verfahren, wie es in Figur 2 gezeigt ist, ein beschädigter Hinterkantenbereich 2 einer Turbinenschaufel 1 repariert, die eine saugseitige Schaufelwand 3, eine druckseitige Schaufelwand 4 sowie eine Vorderkante 5 und eine Hinterkante 6 aufweist. Es sollte allerdings klar sein, dass auch andere beschädigte Bereiche der Turbinenschaufel 1 unter Einsatz des erfindungsgemäßen Verfahrens repariert werden können, insbesondere beschädigte Bereiche der Vorderkante 5.

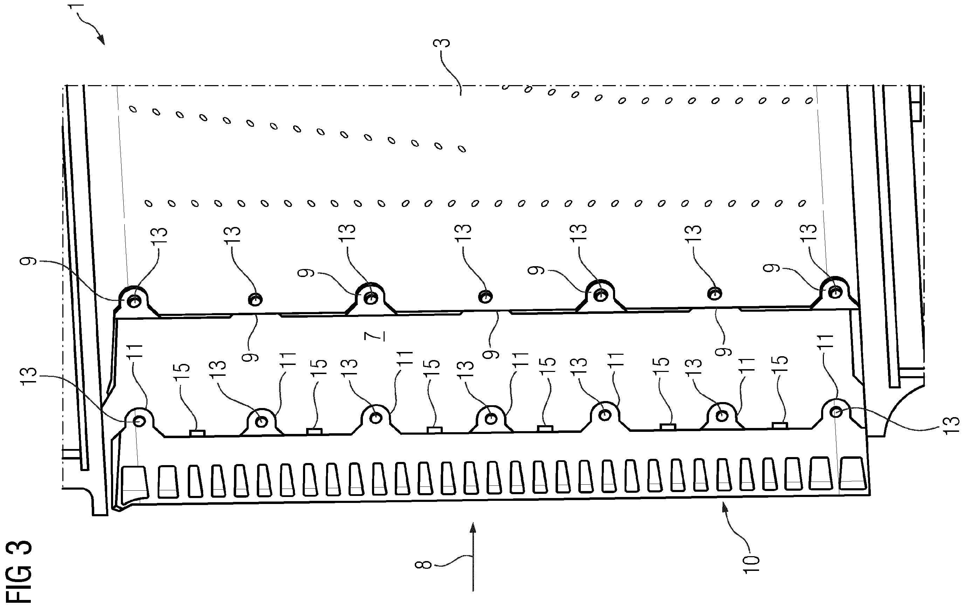

In einem ersten Schritt a) wird der beschädigte Hinterkantenbereich 2 unter Erzeugung eines Ausschnitts 7 entfernt, der in Figur 2 als gestrichelte Linie dargestellt ist. Der Ausschnitt 7 sollte dabei hinreichend groß gewählt werden, um möglichst sämtliche im Bereich der Hinterkante 6 vorhandene Beschädigungen zu erfassen. Der Ausschnitt 7 wird vorliegend unter Einsatz eines Senkerosionsverfahrens erzeugt, wobei grundsätzlich natürlich auch andere Abtragverfahren denkbar sind, wie beispielsweise Fräsen oder Schleifen. Im Rahmen der Herstellung des Ausschnitts 7 werden an den Schaufelwänden 3 und 4 bezogen auf eine Einsetzrichtung 8 hinterschneidungsfreie Ausnehmungen 9 ausgebildet, wobei die Ausnehmungen 9 der saugseitigen Schaufelwand 3 versetzt zu den Ausnehmungen 9 der druckseitigen Schaufelwand 4 positioniert sind, wenn die Turbinenschaufel 1 gemäß Figur 3 von der Seite aus betrachtet wird.

In einem Schritt b) wird dann ein Ersatzteil 10 bereitgestellt, das in den im Schritt a) erzeugten Ausschnitt formschlüssig einsetzbar ist und die Soll-Geometrie der Turbinenschaufel 1 wiederherstellen soll. Die Kantengeometrie des Ersatzteils 10 ist somit korrespondierend zur Kantengeometrie des Ausschnitts 7 ausgebildet. Entsprechend weist das Ersatzteil 10 Vorsprünge 11 auf, die in Einsetzrichtung 8 formschlüssig in die in Schritt a) erzeugten Ausnehmungen 9 der Turbinenschaufel 1 eingeführt werden können. Das Ersatzteil 10 ist insbesondere unter Verwendung eines additiven Fertigungsverfahrens hergestellt. Bei dem Ersatzteil 10 handelt es sich bevorzugt um ein Standardersatzteil mit Standardabmessungen. In diesem Fall erfolgt die Ausbildung des Ausschnitts 7 in Schritt a) unter Berücksichtigung dieser Standardabmessungen des Standardersatzteils.

In einem weiteren Schritt c) wird das Ersatzteil 10 formschlüssig in Einsetzrichtung 8 in den Ausschnitt 7 eingesetzt. Dabei werden die Vorsprünge 11 des Ersatzteils 10 in die in den Schaufelwänden 3 und 4 ausgebildeten Ausnehmungen 9 eingeführt, wodurch sich Bereiche ergeben, in denen das Ersatzteil 10 und die Turbinenschaufel 1 einander überlappen, wenn die Turbinenschaufel 1 von der Seite aus betrachtet wird, siehe erneut die Ansicht in Figur 3. Vor der Durchführung des Schrittes c) kann das Standardersatzteil bearbeitet werden, um gegebenenfalls vorhandene Abweichungen der Geometrie des Standardersatzteils von der Geometrie des Ausschnitts 7 zu minimieren, beispielsweise solche Abweichungen, die sich durch einen Verzug der Turbinenschaufel 1 während des Einsatzes in einer Gasturbine ergeben haben. Nach dem Einsetzen in den Ausschnitt 7 wird das Ersatzteil 10 in Schritt c) ferner mechanisch unter Verwendung von sich durch die einander überlappenden Bereiche erstreckenden Befestigungselementen 12 derart an der Turbinenschaufel 1 fixiert, dass diese mechanische Fixierung ein Herausnehmen des Ersatzteils 10 aus dem Ausschnitt 7 entgegen der vorbestimmten Einsatzrichtung 8 blockiert. Bei den Befestigungselementen 12 handelt es sich vorliegend um stiftartig ausgebildete Befestigungselemente, die sich durch Durchgangsöffnungen 13 erstrecken, die einerseits in den Schaufelwänden 3 und 4 und andererseits in den Vorsprüngen 11 des Ersatzteils 10 ausgebildet sind. Die Durchgangsöffnungen 13 der Turbinenschaufel 1 können beispielsweise in Schritt a) nach der Herstellung des Ausschnitts 7 insbesondere bohrend gefertigt werden.

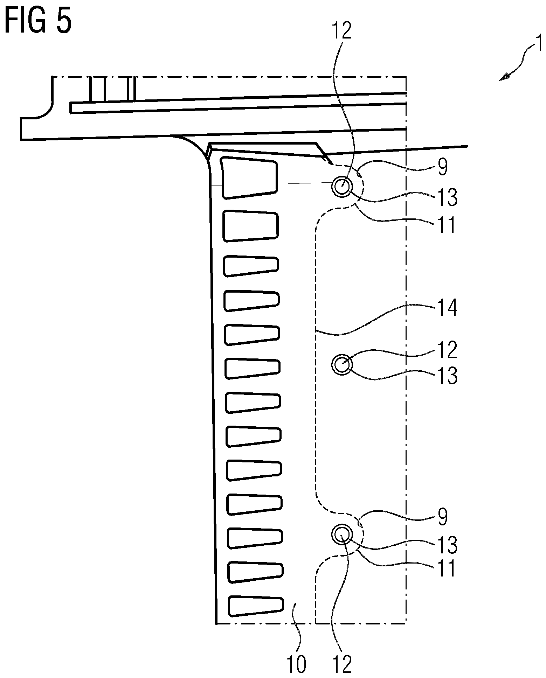

In einem sich anschließenden Schritt d) werden das Ersatzteil 10 und die Turbinenschaufel 1 entlang ihrer Stoßkanten stoffschlüssig miteinander verbunden, vorliegend unter Verwendung eines Hartlötprozesses. Figur 5 zeigt die entsprechenden Verbindungsnähte 14.

Zur Optimierung des stoffschlüssigen Verbindens können die Stoßkanten des Ersatzteils 10 mit abstandhaltenden Vorsprüngen 15 versehen sein, wie es in Figur 3 angedeutet ist, um eine vorbestimmte Fugenbreite für das stoffschlüssige Verbinden einzustellen.

Es sei darauf hingewiesen, dass an das stoffschlüssige Fügen weitere Verfahrensschritte anschließen können, beispielsweise zur mechanischen Bearbeitung der Verbindungsnähte 14, zur Wärmebehandlung der reparierten Turbinenschaufel 1 oder dergleichen.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen, welcher durch die Patentansprüche definiert wird.

## Patentansprüche

1. Verfahren zum Reparieren eines beschädigten Vorder- oder Hinterkantenbereiches (2) einer metallischen Turbinenschaufel (1), die eine saugseitige Schaufelwand (3), eine druckseitige Schaufelwand (4) sowie eine Vorderkante (5) und eine Hinterkante (6) aufweist, umfassend die Schritte:
a) Entfernen des beschädigten Vorder- oder Hinterkantenbereiches (2) unter Erzeugung eines Ausschnitts (7);
b) Bereitstellen eines in den Ausschnitt (7) formschlüssig einsetzbaren, die Soll-Geometrie der Turbinenschaufel (1) wiederherstellenden Ersatzteils (10);
c) formschlüssiges Einsetzen des Ersatzteils (10) in den Ausschnitt (7) in einer vorbestimmten Einsetzrichtung (8), und
d) stoffschlüssiges Verbinden des Ersatzteils (10) mit der Turbinenschaufel (1),
**dadurch gekennzeichnet, dass**
- in Schritt a) an den Schaufelwänden (3, 4) bezogen auf die Einsetzrichtung (8) hinterschneidungsfreie Ausnehmungen (9) ausgebildet werden, wobei die Ausnehmungen (9) der saugseitigen Schaufelwand (3) versetzt zu den Ausnehmungen (9) der druckseitigen Schaufelwand (4) positioniert sind, wenn die Turbinenschaufel (1) von der Seite aus betrachtet wird,
- das in Schritt b) bereitgestellte Ersatzteil (10) Vorsprünge (11) aufweist, die in Schritt c) formschlüssig in die Ausnehmungen (9) eingeführt werden, wobei das Ersatzteil (10) und die Turbinenschaufel (1) nach dem Einsetzen des Ersatzteils (10) einander überlappende Bereiche aufweisen, wenn die Turbinenschaufel (1) von der Seite aus betrachtet wird, und
- das Ersatzteil (10) in Schritt c) nach dem Einsetzen in den Ausschnitt (7) unter Verwendung von sich durch die einander überlappenden Bereiche erstreckenden Befestigungselementen (12) derart an der Turbinenschaufel (1) fixiert wird, dass diese mechanische Fixierung ein Herausnehmen des Ersatzteils (10) aus dem Ausschnitt (7) entgegen der vorbestimmten Einsetzrichtung (8) blockiert.

2. Verfahren nach Anspruch 1,
**dadurch gekennzeichnet, dass**
der Ausschnitt (7) in Schritt a) unter Einsatz eines Erodierprozesses, insbesondere eines Senkerodierprozesses oder Drahterodierprozesses erzeugt wird.

3. Verfahren nach einem der vorhergehenden Ansprüche,
**dadurch gekennzeichnet, dass**
die Befestigungselemente (12) stiftartig ausgebildet und durch in den Überlappungsbereichen vorgesehene Durchgangsöffnungen (13) geführt sind.

4. Verfahren nach einem der vorhergehenden Ansprüche,
**dadurch gekennzeichnet, dass**
das Ersatzteil (10) additiv gefertigt wird.

5. Verfahren nach einem der vorhergehenden Ansprüche,
**dadurch gekennzeichnet, dass**
es sich bei dem Ersatzteil (10) um ein Standardersatzteil mit Standardabmessungen handelt, und dass das Erzeugen des Ausschnitts (7) in Schritt a) unter Berücksichtigung dieser Standardabmessungen erfolgt.

6. Verfahren nach Anspruch 5,
**dadurch gekennzeichnet, dass**
das Standardersatzteil vor dem Einsetzen in Schritt c) bearbeitet wird, um Abweichungen der Geometrie des Standardersatzteils von der Geometrie des Ausschnitts (7) zu minimieren.

7. Verfahren nach einem der vorhergehenden Ansprüche,
**dadurch gekennzeichnet, dass**
die Stoßkanten des Ersatzteils (10) mit abstandshaltenden Vorsprüngen (15) versehen sind, die zur Einstellung einer vorbestimmten Fugenbreite für das stoffschlüssige Verbinden dienen.

8. Verfahren nach einem der vorhergehenden Ansprüche,
**dadurch gekennzeichnet, dass**
das stoffschlüssige Verbinden des Ersatzteils (10) mit der Turbinenschaufel (1) unter Einsatz eines Lötverfahrens erfolgt, insbesondere unter Einsatz eines Engspaltlötverfahrens.

9. Turbinenschaufel (1), die eine saugseitige Schaufelwand (3), eine druckseitige Schaufelwand (4) sowie eine Vorderkante (5) und eine Hinterkante (6) aufweist,
**dadurch gekennzeichnet, dass**
ein beschädigter Vorder- oder Hinterkantenbereich (2) unter Einsatz eines Verfahrens nach einem der vorhergehenden Ansprüche repariert ist.

## Claims

1. Method for repairing a damaged leading or trailing edge region (2) of a metallic turbine blade (1), which has a suction-side blade wall (3), a pressure-side blade wall (4) and a leading edge (5) and a trailing edge (6), comprising the steps:
a) removing the damaged leading or trailing edge region (2), forming a cutout (7);
b) providing a replacement part (10) which can be inserted by form fit into the cutout (7) and which restores the intended geometry of the turbine blade (1);
c) inserting the replacement part (10) by form fit into the cutout (7) in a predetermined insertion direction (8), and
d) connecting the replacement part (10) to the turbine blade (1) by substance bonding,
**characterized in that**
- in step a), recesses (9) without undercut relative to the insertion direction (8) are formed in the blade walls (3, 4), wherein the recesses (9) of the suction-side blade wall (3) are positioned offset to the recesses (9) of the pressure-side blade wall (4) when the turbine blade (1) is viewed from the side,
- the replacement part (10) provided in step b) has protrusions (11) which in step c) are inserted by form fit into the recesses (9), wherein after insertion of the replacement part (10), the replacement part (10) and the turbine blade (1) have regions overlapping one another when the turbine blade (1) is viewed from the side, and
- in step c), after insertion into the cutout (7), the replacement part (10) is fixed to the turbine blade (1) using fixing elements (12) extending through the mutually overlapping regions, such that this mechanical fixing blocks removal of the replacement part (10) from the cutout (7) against the predetermined insertion direction (8).

2. Method according to Claim 1, **characterized in that** in step a), the cutout (7) is produced using an erosion process, in particular a vertical spark erosion process or wire spark erosion process.

3. Method according to any of the preceding claims, **characterized in that** the fixing elements (12) are pin-like and are guided through passage openings (13) provided in the overlapping regions.

4. Method according to any of the preceding claims, **characterized in that** the replacement part (10) is made by additive manufacturing.

5. Method according to any of the preceding claims, **characterized in that** the replacement part (10) is a standard replacement part with standard dimensions, and **in that** the cutout (7) is produced in step a) taking into account these standard dimensions.

6. Method according to Claim 5, **characterized in that** the standard replacement part is machined before insertion in step c), so as to minimize deviations of the geometry of the standard replacement part from the geometry of the cutout (7).

7. Method according to any of the preceding claims, **characterized in that** the abutting edges of the replacement part (10) are provided with spacer protrusions (15) which serve to set a predetermined joint width for the substance-bonded connection.

8. Method according to any of the preceding claims, **characterized in that** the substance-bonded connection of the replacement part (10) to the turbine blade (1) takes place using a soldering process, in particular using a narrow-gap soldering process.

9. Turbine blade (1) having a suction-side blade wall (3), a pressure-side blade wall (4) and also a leading edge (5) and a trailing edge (6), **characterized in that** a damaged leading or trailing edge region (2) is repaired using a method according to any of the preceding claims.

## Revendications

1. Procédé de réparation d'une partie (2) endommagée du bord avant ou du bord arrière d'une aube (1) de turbine métallique, qui a un extrados (3), un intrados (4) ainsi qu'un bord (5) avant et un bord (6) arrière, comprenant les stades :
a) on enlève la partie (2) endommagée du bord avant ou du bord arrière avec production d'une échancrure (7) ;
b) on se procure une pièce (10) de remplacement, qui peut être insérée à complémentarité de forme dans l'échancrure (7) et qui reproduit la géométrie de consigne de l'aube (1) de turbine ;
c) on insère à complémentarité de forme la pièce (10) de remplacement dans l'échancrure (7) dans un sens (8) d'insertion déterminé à l'avance, et
d) on relie à complémentarité de matière la pièce (10) de remplacement à l'aube (1) de turbine,
**caractérisé en ce que**
- dans le stade a) on forme sur les dos (3, 4) de la turbine des évidements (9) sans contre-dépouille rapporté au sens (8) d'insertion, dans lequel les évidements (9) de l'extrados (3) sont décalés en position par rapport aux évidements (9) de l'intrados (4), lorsque l'on considère l'aube (1) de turbine par le côté,
- la pièce (10) de remplacement que l'on s'est procurée au stade b) a des saillies (11), que l'on insère dans le stade c) à complémentarité de forme dans les évidements (9), la pièce (10) de remplacement et l'aube (1) de turbine ayant, après l'insertion de la pièce (10) de remplacement, des parties se chevauchant l'une l'autre, lorsque l'on considère l'aube (1) de turbine par le côté, et
- on fixe à l'aube (1) de turbine la pièce (10) de remplacement dans le stade c) après l'insertion dans l'échancrure (7), en utilisant des éléments (12) de fixation s'étendant dans les parties se chevauchant l'une l'autre, de manière à ce que cette fixation mécanique bloque une sortie de la pièce (10) de remplacement de l'échancrure (7) dans le sens contraire au sens (8) d'insertion déterminé à l'avance.

2. Procédé suivant la revendication 1,
**caractérisé en ce que**
l'on produit l'échancrure (7) dans le stade a) en utilisant une opération d'étincelage, en particulier une opération d'étincelage par enfoncement ou une opération d'étincelage par fil.

3. Procédé suivant l'une des revendications précédentes,
**caractérisé en ce que**
les éléments (12) de fixation sont de type en tige et passent dans des ouvertures (13) prévues dans les parties à chevauchement.

4. Procédé suivant l'une des revendications précédentes,
**caractérisé en ce que**
l'on fabrique additivement la pièce (10) de remplacement.

5. Procédé suivant l'une des revendications précédentes,
**caractérisé en ce que**
la pièce (10) de remplacement est une pièce de remplacement standard ayant des dimensions standard, et **en ce que** la production de l'échancrure (7) au stade a) s'effectue en tenant compte de ces dimensions standard.

6. Procédé suivant la revendication 5,
**caractérisé en ce que**
l'on usine la pièce de remplacement standard avant l'insertion dans le stade c) afin de minimiser des écarts de la géométrie de la pièce de remplacement standard à la géométrie de l'échancrure (7) .

7. Procédé suivant l'une des revendications précédentes,
**caractérisé en ce que**
les bords de la pièce (10) de remplacement sont pourvus de saillies (15) de mise à distance, qui servent à régler une largeur de joint déterminée à l'avance pour la liaison à coopération de matière.

8. Procédé suivant l'une des revendications précédentes,
**caractérisé en ce que**
la liaison à coopération de matière de la pièce (10) de remplacement à l'aube (1) de turbine s'effectue en utilisant un procédé de brasure, en utilisant en particulier un procédé de brasure à fente étroite.

9. Aube (1) de turbine, qui a un extrados (3), un intrados (4) ainsi qu'un bord (5) avant et un bord (6) arrière,
**caractérisée en ce qu'**
une partie (2) endommagée du bord avant ou du bord arrière est réparée en utilisant un procédé suivant l'une des revendications précédentes.
